# EUROPÄISCHE PATENTSCHRIFT

(11) **EP 1 060 065 B1**
(45) Veröffentlichungstag und Bekanntmachung des Hinweises auf die Patenterteilung: **23.10.2002**
(21) Anmeldenummer: 98966522.9
(22) Anmeldetag: 10.12.1998
(51) Int. Cl.: B29C 44/12

(54) **VERFAHREN ZUR HERSTELLUNG EINES VERBUNDBAUELEMENTS**
METHOD FOR PRODUCING A COMPOSITE CONSTRUCTION MEMBER
PROCEDE DE PRODUCTION D'UN ELEMENT DE CONSTRUCTION COMPOSITE

(30) Priorität: 18.02.1998 DE 19806725
(43) Veröffentlichungstag der Anmeldung: 20.12.2000
(73) Patentinhaber: Möller Plast GmbH, 33649 Bielefeld (DE)
(72) Erfinder: BECKMANN, Friedhelm, D-32120 Hiddenhausen (DE)
(74) Vertreter: Schirmer, Siegfried, Dipl.-Ing.
(86) Internationale Anmeldenummer: DE9803629
(87) Internationale Veröffentlichungsnummer: WO99042273

(56) Entgegenhaltungen:
- US-A- 4 636 425
- US-A- 4 836 871
- US-A- 5 294 386
- US-A- 5 695 580

## Beschreibung

Die Erfindung betrifft ein Verfahren zur Herstellung eines Verbundbauelements, wobei ein Dekormaterial unter Einsatz eines Klebstoffs mit einem Vlies oder Filz verbunden wird, wobei zwischen Dekormaterial und Vlies ein Kleber mit integriertem Treibmittelsystem aufgebracht und dieser durch Energieeinwirkung zum Schäumen gebracht und dadurch gleichzeitig eine Haftung zwischen Dekormaterial und Vlies hergestellt wird.

Bei der Verarbeitung von Dekormaterial, beispielsweise Textilien, Folien oder Leder, durch z.B. Hinterspritz-, Hinterpreß- oder Hinterblasverfahren ist es in den meisten Fällen erforderlich, das Dekormaterial durch ein Schutzvlies gegen die heiße Kunststorfmasse abzuschirmen, um eine Dekorschädigung zu vermeiden. Hierzu wird ein Schutzvlies auf die Dekorunterseite durch ein Kaschierverfahren aufgebracht. Die Verbindung zwischen Dekormaterial und Vlies erfolgt dabei durch Klebstoffe, die wärmereaktivierbar bzw. vernetzt eingestellt sind oder durch das sogenannte Flammkaschierverfahren, bei dem ein Schaum zwischen Dekormaterial oder Vlies durch eine Flamme aufgeschmolzen wird und durch einen anschließenden Kalandriervorgang eine Verbindung zwischen beiden Materialien eintritt. Bei haptisch anspruchsvollen Teilen wird zusätzlich ein Schaum von beispielsweise 2 mm bis 5 mm zwischen dem Oberflächendekor und dem Schutzvlies eingebracht. Die Schaumschicht führt neben der Verbesserung der haptischen Eigenschaften zu einer Wärmeabschirmung zum Dekormaterial. Dünne Schaumschichten von z.B. 0.2 mm bis 3 mm sind nach diesem Verfahren nicht herstellbar bzw. führen einen Einsatz von überwiegend PP-haltigen Vliesstoffen zu Haftungsstörungen. Schmelzklebstoffe allein wiederum führen zu keinen Schaumstrukturen und werden im unvernetzten Zustand bei Temperaturen > 100°C wieder aufgeschmolzen und bei Druckeinwirkung durch die Gewebestruktur hindurchgedrückt. Hierdurch kommt es zu Oberflächenstörungen bei dem Dekormaterial.

Aus der US-4,836,871 auf die sich der Obergegriff des Anspruchs 1 stützt, ist ein Verfahren zum Herstellen einer laminierten Bahn bekannt, wobei eine erste Gewebebahn mit einem flüssigen Klebstoffinaterial beschichtet und darauf eine zweite Gewebebahn aufgelegt wird, wonach beide Gewebebahnen zusammengedrückt werden und der Klebstoff unter Wärmeeinwirkung aufgeschäumt wird. Auch hier kann es aufgrund der Druckeinwirkung zu einem Hindurchdrücken des Klebstoffs bzw. Schaums durch die Gewebestruktur und somit zu Oberflächenstörungen kommen.

Der Erfindung liegt die Aufgabe zugrunde, ein Verfahren zur Herstellung eines Verbundbauelements zu schaffen, bei dem eine gute Haftung zwischen dem Dekormaterial und dem Vlies erzielbar ist bei Verbesserung der haptischen Eigenschaften ohne Beeinträchtigung der Oberseite des Dekormaterials.

Diese Aufgabe wird erfindungsgemäß durch ein Verfahren nach Anspruch 1 gelöst. In Ausgestaltung der Erfindung werden die Einzelkomponenten zunächst vor der Kaschieranlage z. B. ausgehend von Rollenbahnen lose gefügt. Innerhalb der Kaschieranlage wird dann der Klebstoff durch Energieeinwirkung zum Aufschmelzen gebracht. Das im Klebstoff enthaltene Treibmittelsystem wird dabei direkt oder erst in einem nachgeschalteten Arbeitsgang zur Reaktion gebracht und führt dabei zur Schaumbildung. Die Energieeinwirkung kann durch Heißlufi, Infrarot, Kontaktwärme oder Mikrowellen erfolgen. Vorteilhafterweise ist die Dicke der Schaumschicht durch die Partikelgröße bzw. Folienstärke und/oder Treibmittelgehalt variierbar. Es besteht die Möglichkeit, den Schaum vernetzt einzustellen und dadurch nach der Schaumbildung durch Energieeinwirkung ein erneutes Aufschmelzen vermieden wird.

Ein Ausführungsbeispiel der Erfindung ist in der Zeichnung dargestellt und wird nachfolgend näher beschrieben. Es zeigen:
- Fig. 1: einen Vertikalschnitt durch ein Vlies, eine Klebefolie und einem Dekormaterial vor der Zusammenfügung und
- Fig. 2: einen Vertikalschnitt durch ein Verbundbauelement.

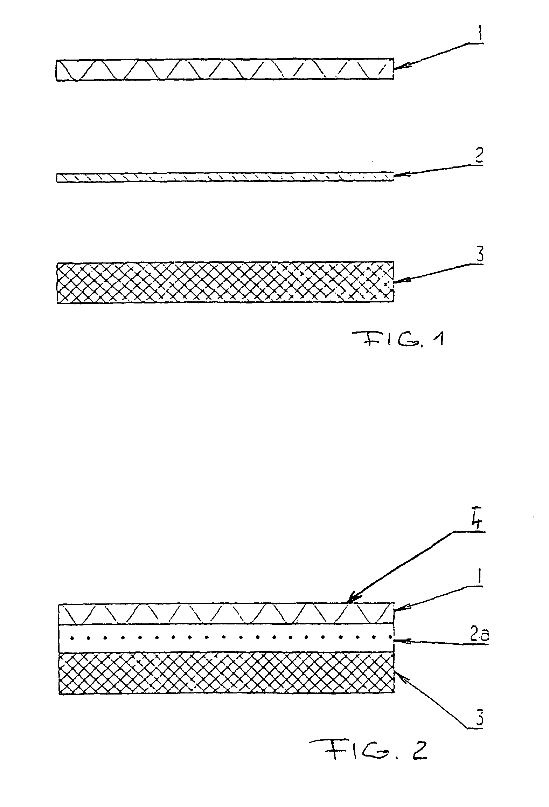

Das Verbundbauelement 4 besteht aus einem Dekormaterial 1, einer Klebefolie 2 und einem Vlies 3, die zusammengefügt werden. Durch Energieeinwirkung reagiert das in der Klebefolie 2 integrierte Treibmittelsystem unter Schaumbildung, die geschäumte Klebefolie 2a weist eine Stärke zwischen 0,2 mm und 3 mm auf, ist also um ein mehrfaches stärker als die Klebefolie 2, was sich auch aus den Figuren 1 und 2 entnehmen läßt.

### Aufstellung der Bezugszeichen:

- 1: Dekormaterial
- 2: Schmelzkleber (Klebefolie)
- 2a: geschäumte Klebefolie
- 3: Vlies
- 4: Verbundbauelement

## Patentansprüche

1. Verfahren zur Herstellung eines Verbundbauelements, wobei ein Dekormaterial (1) unter Einsatz eines Klebstoffs mit einem Vlies (3) oder Filz verbunden wird, wobei zwischen Dekormaterial (1) und Vlies (3) ein Kleber (2) mit integriertem Treibmittelsystem aufgebracht und dieser durch Energieeinwirkung zum Schäumen gebracht und dadurch gleichzeitig eine Haftung zwischen Dekormaterial (1) und Vlies (3) hergestellt wird, **dadurch gekennzeichnet, daß** der Kleber (2) in Form einer Folie oder pulverförmig aufgebracht wird.

2. Verfahren nach Anspruch 1, **dadurch gekennzeichnet, daß** die Energieeinwirkung durch Heißluft, Infrarot, Kontaktwärme oder Mikrowellen erfolgt.

3. Verfahren nach Anspruch 1 oder 2, **dadurch gekennzeichnet, daß** die Dicke der Schaumschicht durch die Partikelgröße bzw. Folienstärke und/oder den Treibmittelgehalt variierbar ist.

4. Verfahren nach einem der Ansprüche 1 bis 3, **dadurch gekennzeichnet, daß** der Schaum vernetzt eingestellt wird und dadurch nach der Schaumbildung durch Energieeinwirkung ein erneutes Aufschmelzen vermieden wird.

## Claims

1. Method of producing a composite component, wherein a decorative material (1) is connected with a non-woven fabric (3) or a felt with use of an adhesive, wherein a glue (2) with integrated expanding system is applied between decorative material (1) and non-woven fabric (3) and this is caused to foam by the action of energy and thereby an adhesion between decorative material (1) and non-woven fabric (3) is simultaneously produced, **characterised in that** the glue (2) is applied in the form of a film or in powder form.

2. Method according to claim 1, **characterised in that** the energy action is effected by hot air, infrared radiation, contact heat or microwaves.

3. Method according to claim 1 or 2, **characterised in that** the thickness of the foam layer is variable by the particle size or film thickness and/or the expanding agent content.

4. Method according to one of claims 1 to 3, **characterised in that** the foam is used in cross-linked form and a renewed melting is thereby avoided after formation of foam by the action of energy.

## Revendications

1. Procédé de production d'un élément de construction composite, selon lequel un matériau décoratif (1) est lié à un non-tissé (3) ou à un feutre en utilisant une substance adhésive, on applique entre le matériau décoratif (1) et le non-tissé (3) une colle (2) avec un système de produit moussant intégré et celui-ci est amené à l'état moussant sous l'action de l'énergie et de cette manière on produit en même temps une adhésion entre le matériau décoratif (1) et le non-tissé (3),
**caractérisé en ce que**
la colle (2) est appliquée sous forme de feuille ou de poudre.

2. Procédé selon la revendication 1,
**caractérisé en ce que**
l'action de l'énergie est obtenue par air chaud, par infrarouge, par chaleur de contact ou par micro-ondes.

3. Procédé selon la revendication 1 ou 2,
**caractérisé en ce que**
l'épaisseur de la couche moussante peut être modifiée par la grandeur des particules ou par l'épaisseur de la feuille et/ou par la teneur en produit moussant.

4. Procédé selon l'une des revendications 1 à 3,
**caractérisé en ce que**
l'on introduit la mousse sous forme réticulée et qu'on évite ainsi une nouvelle fusion après la formation de mousse par action d'énergie.
